# EUROPEAN PATENT APPLICATION

(11) **EP 2 706 496 A1**
(43) Date of publication of application: **12.03.2014**
(21) Application number: 12006307.8
(22) Date of filing: 07.09.2012
(51) Int. Cl.: G06Q 30/02, G06F 17/30

(54) **Device, method and computer-readable medium for recognizing places in a text**

(71) Applicant: BlackBerry Limited, Waterloo, ON N2K 0A7 (CA)
(72) Inventor: Ngo, Ngoc Bich, Kanata Ontario, K2K 3K1 (CA); Sartipi, Siamak, Waterloo, Ontario, N2L 3W8 (CA); Beckett, Jason Christopher, Waterloo, Ontario, N2L 3W8 (CA)
(74) Representative: Patel, Binesh

(57) **Abstract**

A computer-implemented place-recognition method comprises searching text for a place-indicating text string (word or character), identifying a place reference from the text based on the place-indicating word or character, and looking up the place reference in a place database to determine if the place reference corresponds to a place for which place data is stored in the place database. If the place is already in the database, a menu of user-selectable actions may be presented. If the place is not in the database, the device may ask the user whether the place should be added to the database. Searching the text may also comprise searching the text for one of a plurality of frequent search terms. If a place reference corresponding to a frequent search term is in the database, the place is linked. If not, the place is still linked but only for local search.

## Description

### TECHNICAL FIELD

The present technology relates generally to computing devices and, in particular, to the processing and handling of location-related or place-related data content.

### BACKGROUND

Mobile devices or wireless communications device may offer location-based services (LBS). In a traditional paradigm, each application on the device that utilizes location data (e.g. maps, calendar, address book, instant messaging, etc.) stores its own location data. This redundant data is not only duplicated on the device but techniques for sharing of this data across applications are presently quite limited. Furthermore, techniques for identifying locations for which data exists or that are of interest to the user are also quite limited. A technology that is able to automatically recognize a location or place for which data exists in a database or that is of interest to a user would thus be highly desirable.

### BRIEF DESCRIPTION OF THE DRAWINGS

Further features and advantages of the present technology will become apparent from the following detailed description, taken in combination with the appended drawings, in which:

FIG. 1 is a depiction of a mobile device on which the present technology may be implemented, the depiction including a schematic depiction of some components of the mobile device;

FIG. 2 is a functional block diagram of a place-data management system in accordance with one implementation of the present technology;

FIG. 3 is a schematic depiction of the centralized place data store for providing all place data to all applications executed by the mobile device;

FIG. 4 is a schematic depiction of the various categories or types of place data that the place data store maintains for each place;

FIG. 5 is an example of a map displayed by a mapping application on a mobile device, showing a user interface element for setting a POI as a favourite place;

FIG. 6 is an example of a UI that presents favourite places;

FIG. 7 is an example of a UI that presents place data for one selected place;

FIG. 8 is another example of a UI that presents place data for one selected place;

FIG. 9 is a flowchart depicting steps of a method in accordance with one implementation of the present technology;

FIGS. 10a-10d depict mobile device user interfaces for creating new data for a place;

FIGS. 11a-11c depict mobile device user interfaces for displaying a menu of action options for performing various actions in relation to a place;

FIGS. 12a-12b depict mobile device user interfaces that enable toggling between a map and a list of favourite places ("My Places");

FIG. 12c depicts a menu of action options for performing various actions in relation to a geolocated place;

FIGS. 13a-13d depict various place-related user interfaces; and

FIG. 14a depicts a place view UI that lists all content related to the place;

FIG. 14b depicts a UI that enables the user to control which types of content is to be presented;

FIG. 14c depicts a local query UI with a UI element for adding one of the search results as a favourite place;

FIG. 15a depicts a map showing a POI that is near a place;

FIG. 15b depicts a map showing a POI augmented with location-based advertising;

FIG. 16a depicts a place view for a weekly meeting;

FIG. 16b depicts one example of a place view for a commercial establishment;

FIG. 16c depicts another example of a place view for a commercial establishment;

FIG. 17a depicts a place view for a contact;

FIG. 17b depicts a place view for a coffee shop;

FIG. 17c depicts a place view for an intersection, showing a traffic update;

FIG. 18 is a flowchart depicting a method of recognizing a place in accordance with an implementation of the present technology;

FIG. 19 depicts the identification of non-address place references in a body of text of an e-mail message;

FIG. 20 depicts the selection by the user of one of the non-address place references ("John's house");

FIG. 21 depicts a UI presenting a menu of actions that may be performed in relation to the place "John's house";

FIG. 22 depicts a UI presenting place-related content for the place "John's house"; and

FIG. 23 depicts a UI presenting an option to add a new place to a place database.

It will be noted that throughout the appended drawings, like features are identified by like reference numerals.

### DETAILED DESCRIPTION

A place recognizer automatically recognizes place references in text that refer to places stored in a centralized place database. The place recognizer, which may be embodied as a computing device, a computer-implemented method, or a computer-readable medium, causes the computing device to scan or search a body of text for a place-indicating text string such as word or character (e.g. a place-indicating word such as "my" or an apostrophe in a word such as "John's"). The device then identifies a place reference (e.g. "my home" or "John's house") from the text based on the place-indicating text string (word or character). The device then looks up the place reference (e.g. "my home" or "John's house") in a place database to determine if the place reference corresponds to a place for which place data is already stored in the place database.

In one implementation, if the place reference corresponds to a place already stored in the place database, the device is configured to hyperlink the place in the text and to present, e.g. in response to user input, a menu of user-selectable actions in relation to the place data for the place. On the other hand, if the place reference does not correspond to a place in the place database, the device is configured to present a user interface asking the user whether to add the place reference as a new place to the place database.

Additionally, in one main implementation, the place recognizer also searches the text for one or more of a plurality of frequent search terms, e.g. pizza, coffee, gas, Starbucks, Walmart, etc. which may be user-configured or learned by the device. If one of these frequent search terms is found in the text, the device then determines if this frequent search term is also a place stored in the place database. If the frequent search term is a place already stored in the place database, the device hyperlinks the place and presents, e.g. in response to user input, a menu of user-selectable actions that may be performed in relation to the place and its place data. If the frequent search term is not a place in the place database, the device still hyperlinks the place in the text but only for the purposes of enabling a local search.

Accordingly, when a place reference that is detected in the text corresponds to a place stored in the place database, the device is then in a position to instantly retrieve, use or present the place data for the place by extracting all or a subset of this data from a place database. The user of the device may thus readily view, use, share, modify, update or otherwise interact with the place data for the place without having to formally search for it. This place recognizer therefore greatly facilitates the access, usage and viewing of place-related content for the user, particularly in cases where content is created or received without formal or standardized place references such as street addresses. The place recognizer may process data content from any number of sources (e-mails, attachments, tweets, blogs, etc.) and provides ready access to the place data for any recognized place stored in the place database without requiring the user to manually request the place data from the database. This makes the place data instantly accessible, thereby improving access to information and productivity.

Accordingly, one aspect of the present technology is a computer-implemented method place-recognition method comprising searching text for a place-indicating text string (word or character), identifying a place reference from the text based on the place-indicating text string, and looking up the place reference in a place database to determine if the place reference corresponds to a place for which place data is stored in the place database.

Another aspect of the present technology is a computer-readable medium comprising instructions in code which when loaded into a memory and executed by a processor of a computing device cause the computing device to search text for a place-indicating text string (word or character), identify a place reference from the text based on the place-indicating text string, and look up the place reference in a place database to determine if the place reference corresponds to a place for which place data is stored in the place database.

Another aspect of the present technology is a computing device comprising a memory operatively coupled to a processor for a memory operatively coupled to a processor for searching text for a place-indicating text string (word or character), identifying a place reference from the text based on the place-indicating text string, and looking up the place reference in a place database to determine if the place reference corresponds to a place for which place data is stored in the place database.

For each of the computer-implemented method, computer-readable medium and computing device, searching the data content may involve parsing the textual data content (body of text) for a place-indicating word, phrase or character, e.g. a proper name with an apostrophe; a possessive pronoun followed immediately by a noun; and a predetermined location-indicative keyword or phrase.

The details and particulars of these aspects of the technology will now be described below, by way of example, with reference to the drawings.

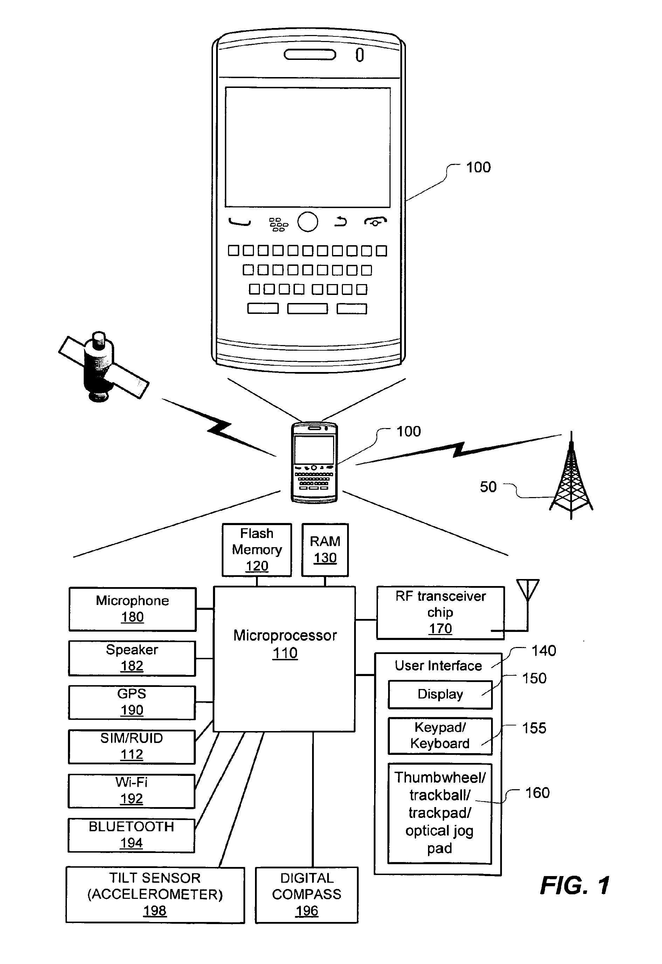

FIG. 1 is a depiction of a wireless communications device or mobile device as one example of a computing device that may be used to implement this novel technology. Examples of a mobile device or wireless communications device include cell phones, smart phones, mobile phones, portable digital assistants, or any other such portable or handheld electronic communications devices such as laptops, tablets, pads, notebooks, palmtops, or like devices that have a processor, memory and display. This novel place view technology is particularly useful for mobile devices but it can also be used on desktop computers, workstations, terminals or any other fixed or static computing device.

As shown by way of example in FIG. 1, the mobile device, which is generally designated by reference numeral 100, and which represents one example of a computing device, includes a processor 110 and memory 120, 130 for executing one or more applications. The memory may include flash memory 120 and/or random access memory (RAM) 130. Other types or forms of memory may be used.

As depicted by way of example in FIG. 1, the mobile device 100 includes a user interface 140 for interacting with the mobile device and its applications and, in this instance, for receiving user input to set up a call to another device. The user interface 140 may include one or more input/output devices, such as a display screen 150 (e.g. an LCD or LED screen or touch-sensitive display screen), and a keyboard or keypad 155. The user interface may also include an optical jog pad 160 and/or a thumbwheel, trackball, track pad or equivalent.

As depicted by way of example in FIG. 1, the mobile device 100 may include a wireless transceiver 170 for communicating with other devices. The transceiver 170 may be a radiofrequency (RF) transceiver for wirelessly communicating with one or more base stations 50 over a cellular wireless network using cellular communication protocols and standards for both voice calls and packet data transfer such as GSM, CDMA, GPRS, EDGE, UMTS, LTE, etc. Where the computing device 100 is a wireless communications device, the device may include a Subscriber Identity Module (SIM) card 112 for GSM-type devices or a Re-Usable Identification Module (RUIM) card for CDMA-type devices. The RF transceiver 170 may include separate voice and data channels.

The mobile device 100 may optionally include one or more ports or sockets for wired connections, e.g. USB, HDMI, FireWire (IEEE 1394), etc. or for receiving non-volatile memory cards, e.g. SD (Secure Digital) card, miniSD card or microSD card.

For voice calls, the mobile device 100 includes a microphone 180, a speaker 182 and/or an earphone jack. Optionally, the device may include a speech-recognition subsystem for transforming voice input in the form of sound waves into an electrical signal. The electrical signal is then processed by a speech-recognition module (digital signal processor) to determine voice commands from the voice input. Voice commands may be used to initiate a call and to select the call recipient from an address book.

Optionally, the mobile device 100 includes a positioning subsystem such as a Global Positioning System (GPS) receiver 190 (e.g. in the form of a chip or chipset) for receiving GPS radio signals transmitted from one or more orbiting GPS satellites. References herein to "GPS" are meant to include Assisted GPS and Aided GPS. Although the present disclosure refers expressly to the "Global Positioning System", it should be understood that this term and its abbreviation "GPS" are being used expansively to include any satellite-based navigation-signal broadcast system, and would therefore include other systems used around the world including the Beidou (COMPASS) system being developed by China, the multinational Galileo system being developed by the European Union, in collaboration with China, Israel, India, Morocco, Saudi Arabia and South Korea, Russia's GLONASS system, India's proposed Regional Navigational Satellite System (IRNSS), and Japan's proposed QZSS regional system.

Another sort of positioning subsystem may be used as well, e.g. a radiolocation subsystem that determines its current location using radiolocation techniques, as will be elaborated below. In other words, the location of the device can be determined using triangulation of signals from in-range base towers, such as used for Wireless E911. Wireless Enhanced 911 services enable a cell phone or other wireless device to be located geographically using radiolocation techniques such as (i) angle of arrival (AOA) which entails locating the caller at the point where signals from two towers intersect; (ii) time difference of arrival (TDOA), which uses multilateration like GPS, except that the networks determine the time difference and therefore the distance from each tower; and (iii) location signature, which uses "fingerprinting" to store and recall patterns (such as multipath) which mobile phone signals exhibit at different locations in each cell. A Wi-Fi™ Positioning System (WPS) may also be used as a positioning subsystem. Radiolocation techniques and/or WPS may also be used in conjunction with GPS in a hybrid positioning system.

Optionally, the mobile device 100 may include a Wi-Fi™ transceiver 192, a Bluetooth® transceiver 194, and/or a near-field communications (NFC) chip. The mobile device 100 may also optionally include a transceiver for WiMax™ (IEEE 802.16), a transceiver for ZigBee® (IEEE 802.15.4-2003 or other wireless personal area networks), an infrared transceiver or an ultra-wideband transceiver.

Optionally, the mobile device may include other sensors like a digital compass 196 and/or a tilt sensor or accelerometer 198.

The mobile device 100, which is one example of a computing device, thus uses its memory 120, 130 (in one implementation) to store all place data for the mobile device in a centralized place data store for each of a plurality of places. The centralized place data store may be a single data store or may be a group of cooperative data stores, or any suitable arrangement of data stores. The centralized database or data store may be a unified, common, or shared database or data store. The processor 110 is operatively coupled to the memory 120, 130 to execute a plurality of applications. These applications may require positioning data, e.g. GPS coordinates. The processor determines when location data or more broadly place-related data is required for the applications and obtain all of the location data and/or place-related data required for all applications on the mobile device from the centralized place data store (or database) 200. In another implementation, the centralized data store (or database) may be situated at a server or server cluster accessible by the mobile device.

For the purposes of this specification, place data (or place-related data) is data, e.g. computer-readable code, that represents place-related information or place-related content that describes a place. The place-related content and information may be text, maps, photos, video, audio files, or other data. The place-related information and content is thus a multi-faceted description of the place. One element of this description is the location of the place, which may be characterized by location data, such as for example location coordinates, a street address, etc. Thus, the place data encompasses the location data. For the purposes of this specification, place data is meant to encompass not only the data itself but also any references or links to place data stored externally to the centralized place data store. In some embodiments, there may be restrictions inhibiting the physical storage of all place data in the centralized place data store with the rest of the place data. Examples of externally stored data may be any restricted, confidential, or proprietary data that may not be copied to the centralized data store. In these embodiments, only the references or links to the externally stored data are actually stored in the centralized place data store, not the data itself. Nonetheless, the centralized place data store remains the sole recipient of all place data requests from applications. In other words, all applications on the mobile device access only the one centralized place data repository for all required place data.

In one embodiment, the centralized place data store 200 comprises, for each place, a place tag identifying the place. The place is either a physical location or, in some embodiments, a virtual location. A physical location means a geographical location somewhere on earth. A virtual location may be a virtual location or an event that is a proxy for a location such as a meeting (Web conference), conference call, or some other proxy for location that has a location-implicit meaning to the user. In other words, although a virtual meeting may be physically performed at any computer, to the user this virtual meeting implies a place (e.g. his home computer or alternatively his work computer, depending on his own personal context). The physical location is defined by location coordinates, e.g. latitude and longitude coordinates which may be GPS-derived. A user-specified virtual location descriptor identifies the virtual location to the user and this virtual location does not have any physical coordinates associated with it.

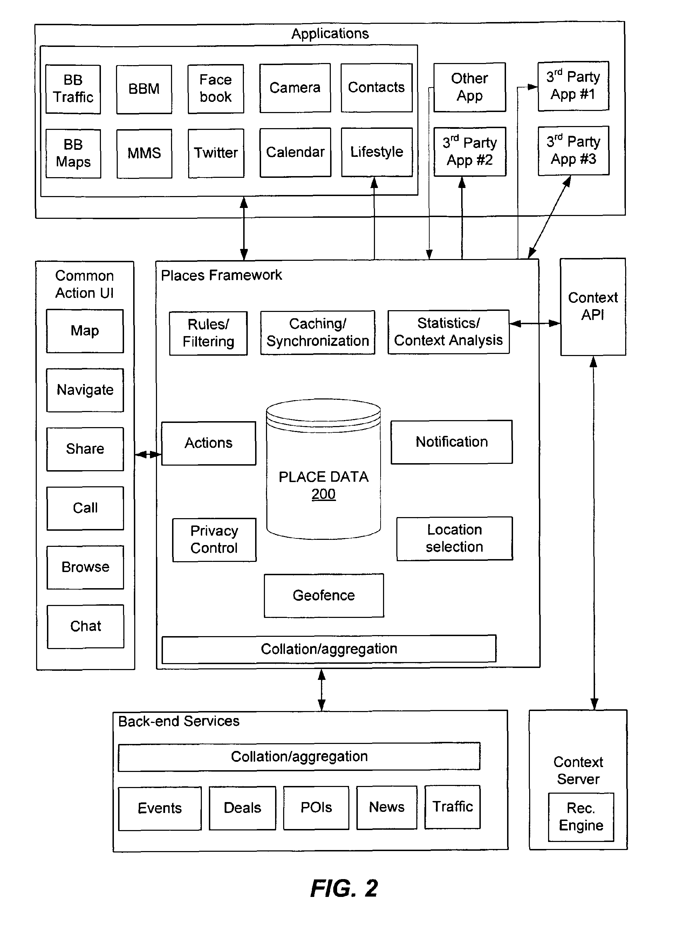

Conceptually, the centralized place data store 200 may be understood as being the core of a places framework such as the one depicted schematically in FIG. 2. The place-related data is not only centralized but this data includes semantic place data that provides a much richer level of place-related content that is conventionally provided. As shown by way of example in FIG. 2, a plurality of device applications (be it applications that are native to the device or third-party applications) interact with the place framework. Some apps may be place data contributors, some may be place data consumers, and some may be both consumers and contributors. This framework includes various modules, as shown, for rules/filtering, caching/syncing, statistics/context analysis, actions, privacy control, notification, location selection, geofencing, collation/aggregation. The actions module interacts with a common action UI that provides functionalities such as mapping, navigation, sharing, calling, browsing, chatting, etc. Therefore, for any location, any of these functions can be performed. In one embodiment, depending on the types of place content available for the place, the relevant actions will be associated with the data and thus can be visually presented to the user and acted upon. The place content type may thus limit the available functionalities/actions for a given place. For example, a share action may be possible for a virtual place whereas a map/navigate action would only be applicable to a physical place (i.e. a real-world location). Backend services, as shown in FIG. 2, may provide collation/aggregation of various content types such as events, deals, POIs, news, traffic incidents, etc. As further depicted by way of example in FIG. 2, the system may include a context API that interacts with a context server having a recommendation engine. This context server may be used to monitor usage patterns (user behaviour) at a given place to see what the user does at that place. Based on the activities and the data requests of the user at that place, the system can intelligently learn the user's personal preferences as they relate to that specific place. This contextual information may be used to supplement the place data in the centralized place data store 200.

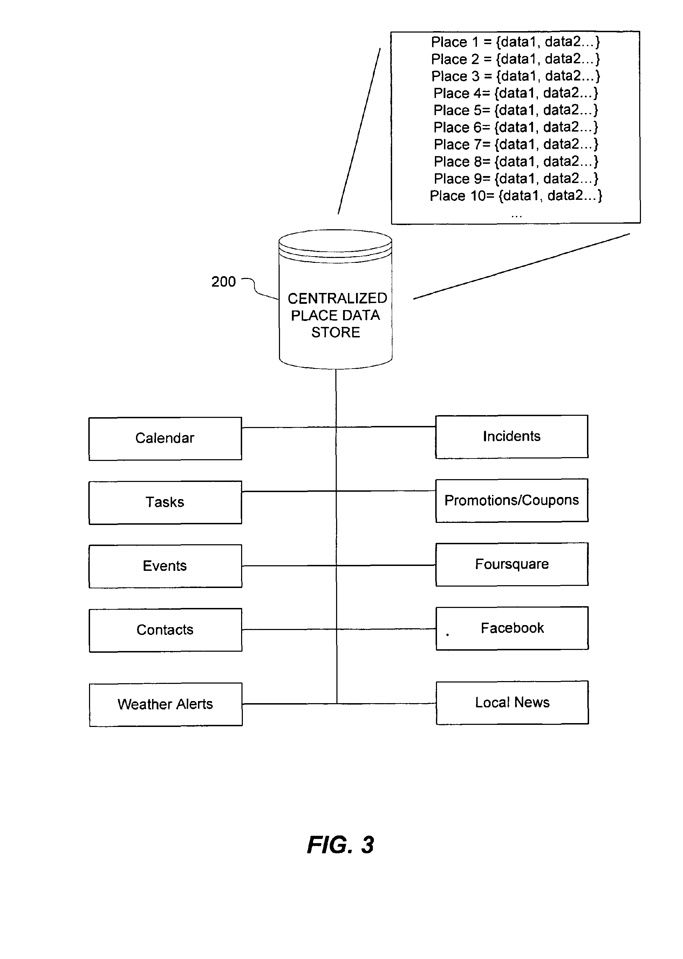

As further illustrated by way of example in FIG. 3, the centralized place data store 200 stores all of the place-related data for a plurality of places. The places may be user-defined or externally defined places. As shown in FIG. 3, the store 200 stores a collection or list of places. Associated with each place is a set of place-related auxiliary data (or synonymously "place data" or "place-related data"). Place auxiliary data is either application-specific data or non-application specific data that describes the place. An example of application-specific auxiliary data are meeting attendees (calendar app) associated at this given place. An example of non-application specific auxiliary data are video, documentary/blogs, statistical data, etc. associated with the place. The place-related auxiliary data can be physically stored in the central Places database or referenced in the Places database to their respective sources. Each application (calendar, tasks, events, contacts, weather alerts, incidents, promotions, Foursquare, Facebook, local news, etc.) obtains all of its place-related data from the centralized place data store 200. This consolidated data store simplifies data updates, ensure consistency of data, and minimizes memory usage.

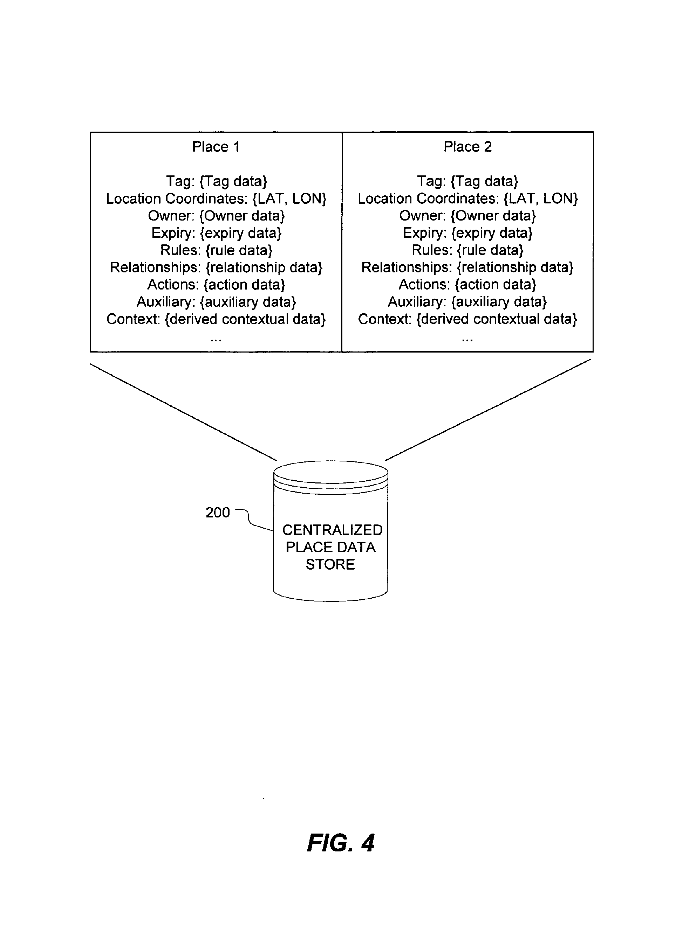

FIG. 4 depicts schematically the various types or categories of place data that may be stored in the centralized place data store 200. For example, each place may be characterized by a tag (name) describing the place, location coordinates (latitude and longitude), its category, a description of the place, keywords related to the place, a start/end time (or an expiry time for the data), auxiliary data such as contacts related to the place, images or photos of the place, videos of the place, URLs to websites related to the place. In addition, as shown in FIG. 4, there may be categories such as available actions, rules governing how the place data is to be shared or not amongst the applications running on the device or how this data is accessed, persisted or visually presented, relationships to contacts or other persons, events, or other places that are in some way related to the place, etc. Relationships may also include relationships between the place and another place or between the place and a plurality of other places. Relationships may also encompass relationships between a place and an event. The relationship between a place and people or events is described in the auxiliary data. As will be appreciated, the categories or types of data may vary. Not all of the types or categories of data for a given place will be specified. In some embodiments, only a subset of these categories are utilized.

For example, in one embodiment, the centralized place data store comprises, for each place, a data owner identifier that identifies an application that owns the data. In one embodiment, the centralized place data store comprises, for each place, a set of rules specifying how the data is to be shared, accessed, persisted or visually presented. In one embodiment, the centralized place data store comprises, for each place, a set of relationships identifying contacts related to the place. In one embodiment, the centralized place data store comprises, for each place, an expiry date specifying when the data will expire or need to be refreshed. In one embodiment, the centralized place data store comprises a set of actions to be performed which are relevant or applicable to the place. Any combination of these data characteristics or attributes may be utilized to characterize a place, i.e. to give the place its semantics.

As mentioned above, place data may also be inferred or learned by the mobile device in response to user behaviour or activities performed by the user using the mobile device when situated at a place or when requesting data about a place. Therefore, in one embodiment, the processor and memory cooperate to monitor usage of location and/or place data by a user of a mobile device when located at a place, derive contextual information about the place and the personal preferences of the user with respect to the place, and integrate the contextual information as additional place-related data.

In another aspect of the technology, the mobile device may regulate how place data is delivered to the various applications on the mobile device. Therefore, in one embodiment, the processor and memory cooperate to register an application for proximity notification. The processor then determines if the mobile device is within a predetermined proximity of a place. In response to determining that the mobile device is within the predetermined proximity of the place, the processor provides a proximity notification to the application.

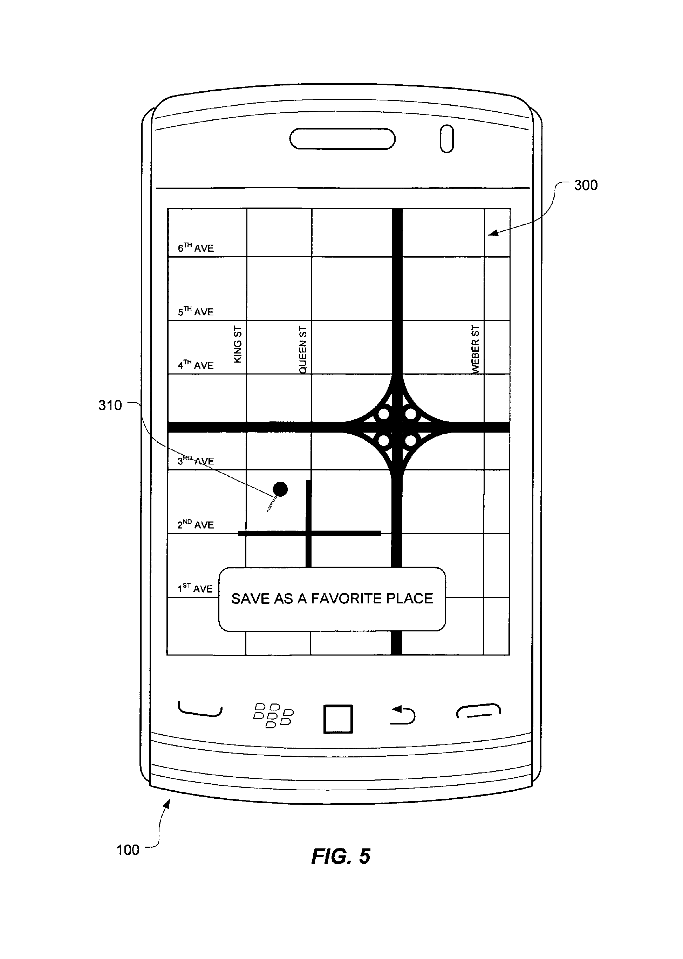

FIG. 5 is an example of a map displayed by a mapping application 300 on a mobile device, showing a user interface element for setting a POI 310 as a favourite place.

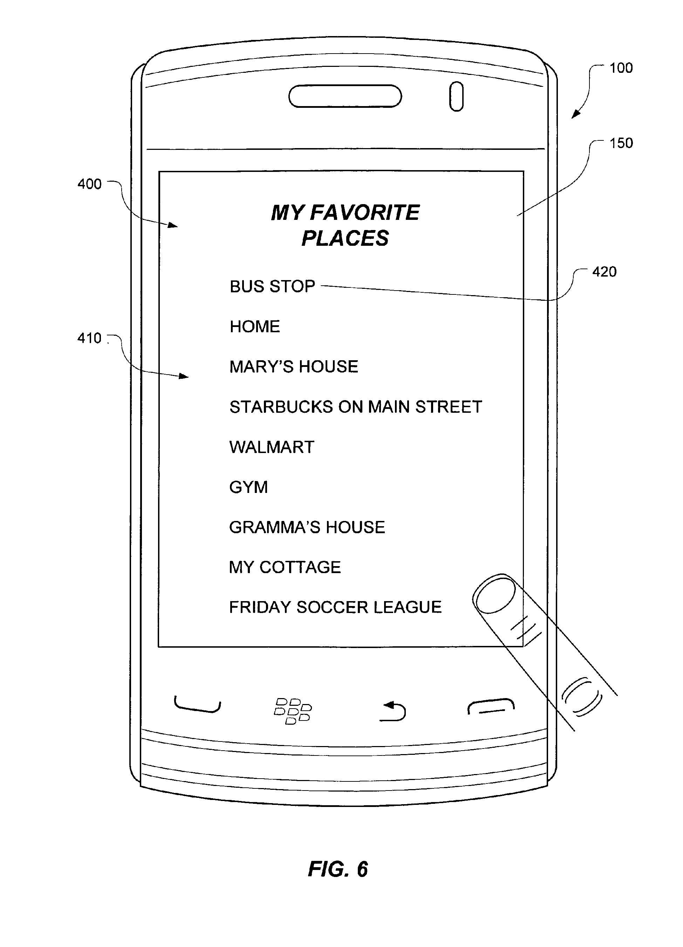

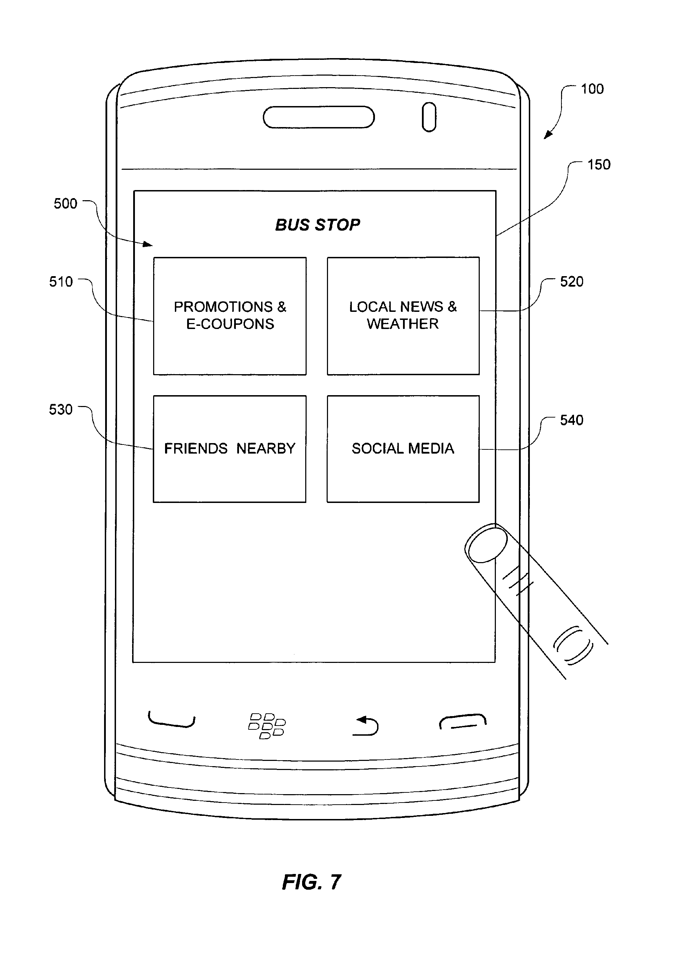

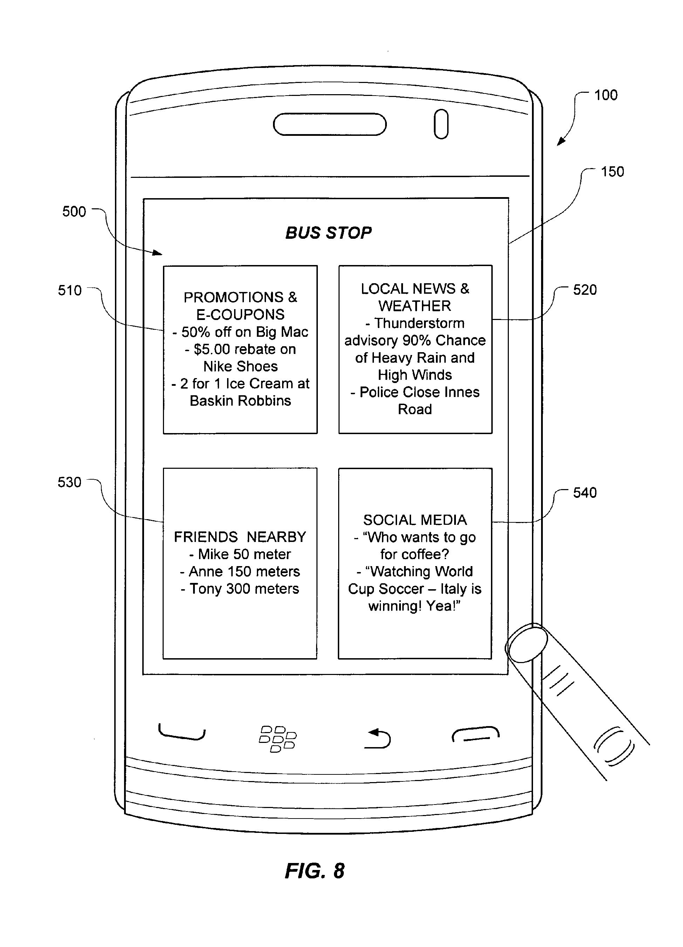

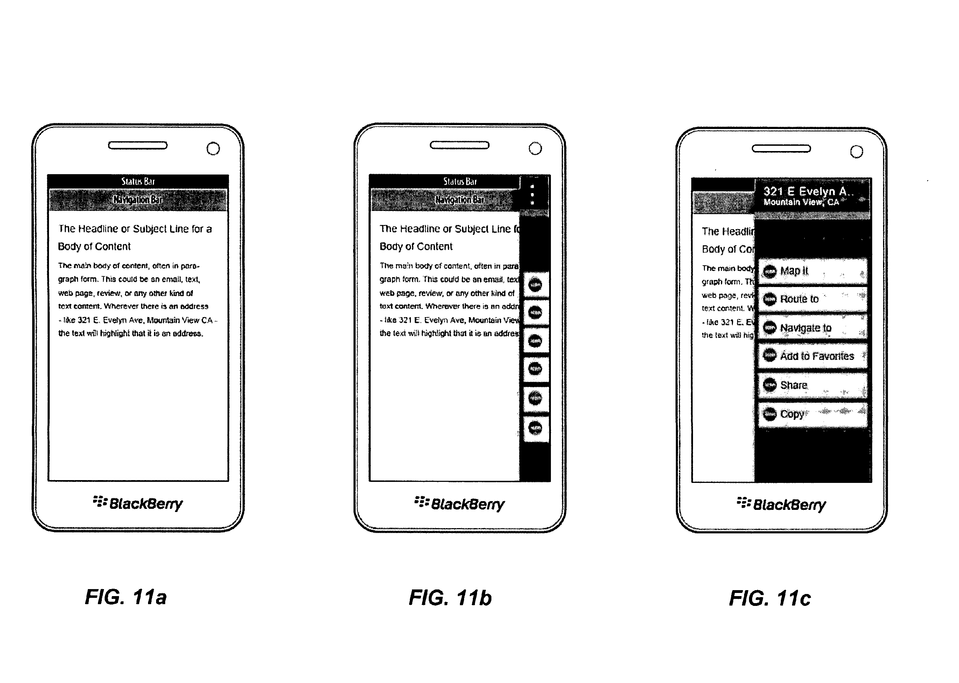

FIG. 6 is an example of a UI that displays favourite places ("My Favourite Places") on a display screen 150 of a mobile device 100. The favourite places UI 400 presents the favourite places as a favourite places list 410, although the favourite places may be displayed in any suitable format. In one embodiment, each listed place 420 is user-selectable (by touching or any other appropriate form of user input) to obtain more information about the listed place. For example, touching or selecting bus stop will cause the device 100 to display a place view for the bus stop. The place view may present place-related information (i.e. auxiliary data related to the place) as shown in FIG. 7 or, alternatively, FIG. 8. In the example of FIG. 7, the place view 500 displayed on the display 150 of the mobile device 100 comprises a plurality of user-selectable categories of place-related data, e.g. promotions & e-coupons 510, local news & weather 520, nearby friends 530 and social media 540. These are solely by way of example, and other categories, layouts or labels may be used. The user may select any one of the categories 510-540 by touching the user interface elements. Alternatively, as shown in FIG. 8, the UI may display all or a subset of the available and most recent place data based on time received, relevancy, or any other prioritization scheme. The UI in FIG. 8 shows the promotions and e-coupons that are relevant for the place (i.e. for the Bus Stop), the local news and weather for the bus stop, which friends are near the bus stop, and any social media feeds that may have some relevancy to the area surrounding the bus stop. The place view thus consolidates and presents all place-related content to the user when the user selects the place. Note that selecting a place may be done without the user physically traveling to the place although in one embodiment the place may be set to correspond to the current location of the mobile device. For each UI shown in FIGS. 6-8, there may be applicable actions displayed as will be illustrated, for example, in FIG. 11c). The actions may include, for example, map, go, browse, call, etc. for the selected place.

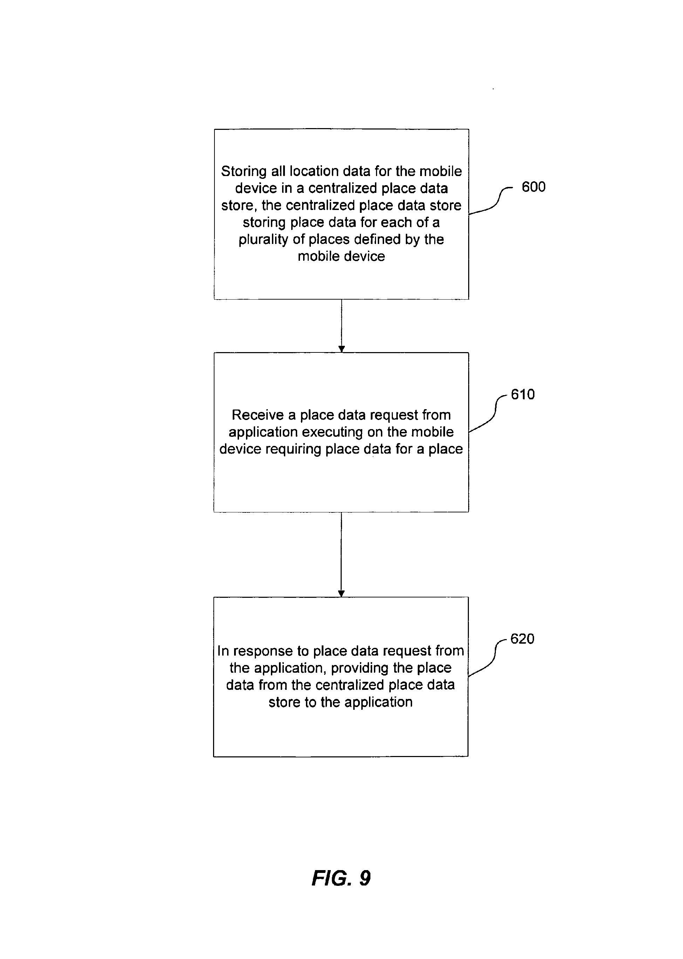

The foregoing technology also provides a novel method of managing place data for a mobile device. As outlined by the flowchart depicted in FIG. 9, the method comprises a step 600 of storing all place data for the mobile device in a centralized place data store. The centralized place data store stores place data for each of a plurality of places. At step 610, a place data request is received from an application executing on the mobile device. The application requires place data for a place. At step 620, in response to the place data request from the application executing on the mobile device, the device provides the place data from the centralized place data store to the requesting application. Centralizing all place data in a central place repository enables place data to be viewed, updated or added by one application to be accessible to all other applications that have the permission to view that place data. The centralized database makes data sharable among apps on the device, improves security/privacy by implementing configurable data-sharing rules, ensures consistency in how data is presented and used, optimizes memory usage as data is no longer duplicated for each app, and it extensible as new place content sources can be plugged in remotely or onboard. In some embodiments, the place data requests do not need to be received concurrently or simultaneously, and furthermore the applications executing on the device also do not need to be executing concurrently or simultaneously. In some embodiments, all available place data is stored in the data store whereas in other embodiments, only a subset of all available place data is stored in the data store.

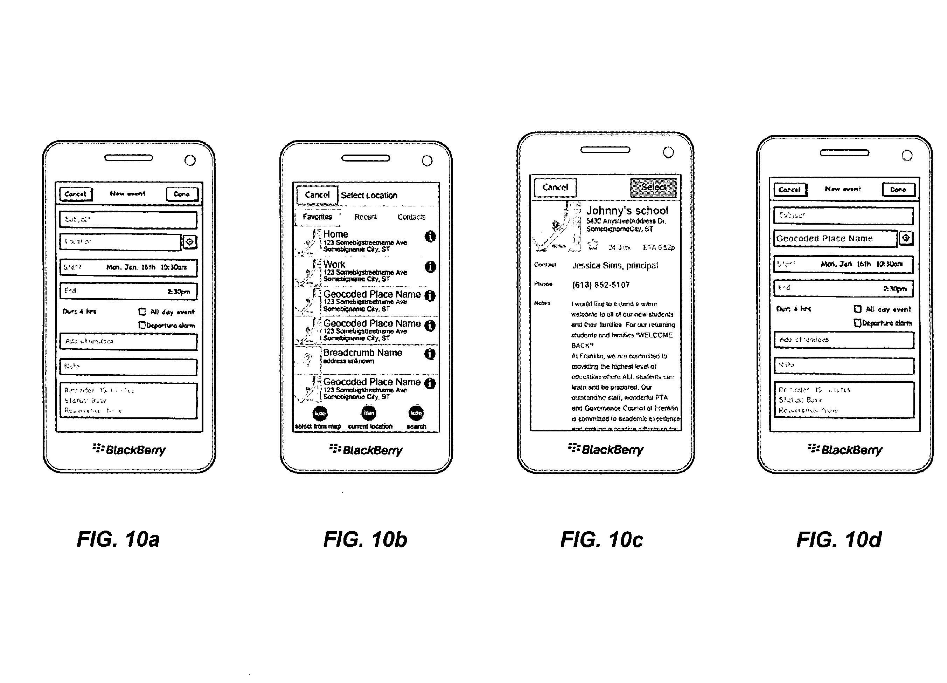

FIGS. 10a-17c present various user interfaces that may be used on a mobile device (or other computing device) in relation to the foregoing technology. These are presented solely to further illustrate the inventive concepts and should not be interpreted as limiting the invention or as representing the only UIs that may implement this novel place-data-centric paradigm. Other UIs with other layouts, configurations, and labels may be employed to implement this novel technology.

FIGS. 10a-10d depict mobile device user interfaces for creating new data for a place. FIG. 10a shows a UI for creating a new event. Exemplary fields include subject, location, start time, end time, attendees, notes, reminder, status, recurrence, etc. Similarly, FIG. 10d shows the UI in which the location field of the meeting event is now populated with the place selected by the user via the UIs depicted in FIGS. 10b and 10c. FIG. 10b shows a UI that displays a list of places or locations. The device may provide a favourites list, a recent list, and a contacts list, as shown. User interface elements may be provided to select a location from a map, to use the current location of the device or to search. FIG. 10c depicts a UI that displays a place ("Johnny's school"), its address, distance, driving time (ETA), contact information (the principal's name), phone number, and notes relating to the place (i.e. relating to the school).

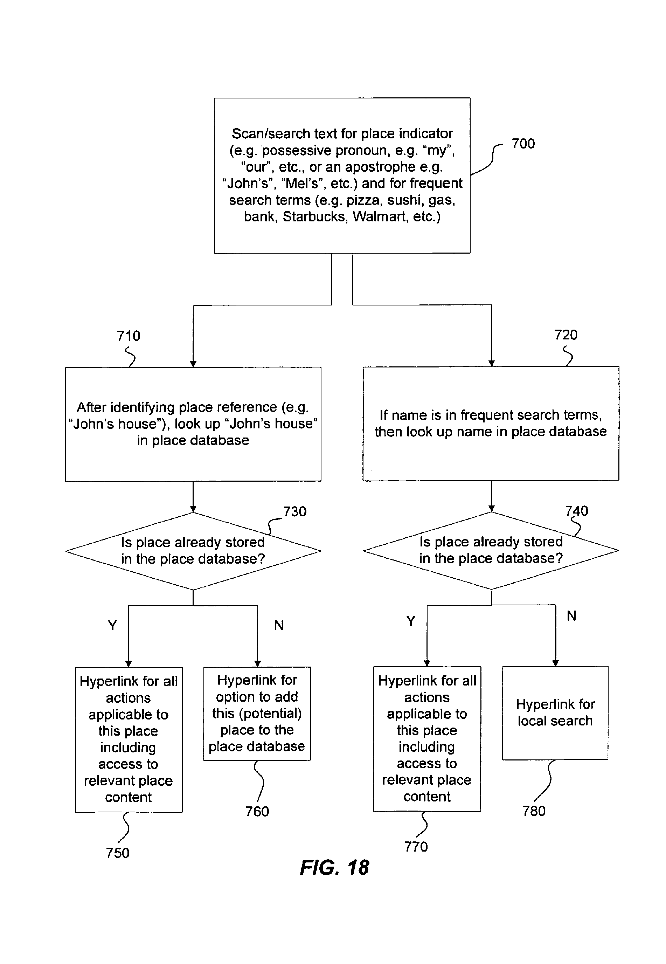

FIGS. 11a-11c depict mobile device user interfaces for displaying a menu of action options for performing various actions in relation to a recognized place in the text field, e.g. a place that has been recognized using the place recognizer. Specifically, FIG. 11a shows a UI displaying a corpus of textual content from which a street address (civic address) is identified (e.g. 321 E. Evelyn Ave, Mountain View, CA"). Identification of the address may be done by parsing the text. The address may be hyperlinked or otherwise highlighted. Identification of this address may trigger the display of a menu or other user interface element for performing actions in related to data stored in relation to the place corresponding to the address. For example, a menu may slide out from the right side of the UI, as shown in FIG. 11b to provide menu items (actions) that may be performed in relation to the location (address). For example, the menu items may include actions such as map it, route to, navigate to, add to favourites, share, copy, etc. The add to favourites action adds the place to a place data repository, e.g. to a centralized place database. FIGS. 11a-11c thus illustrate the use of the place recognizer to recognize a place by identifying a street address as a unambiguous place reference to a place. The place recognizer is also capable of recognizing non-address place references, as will be explained below with respect to FIGS. 18-22.

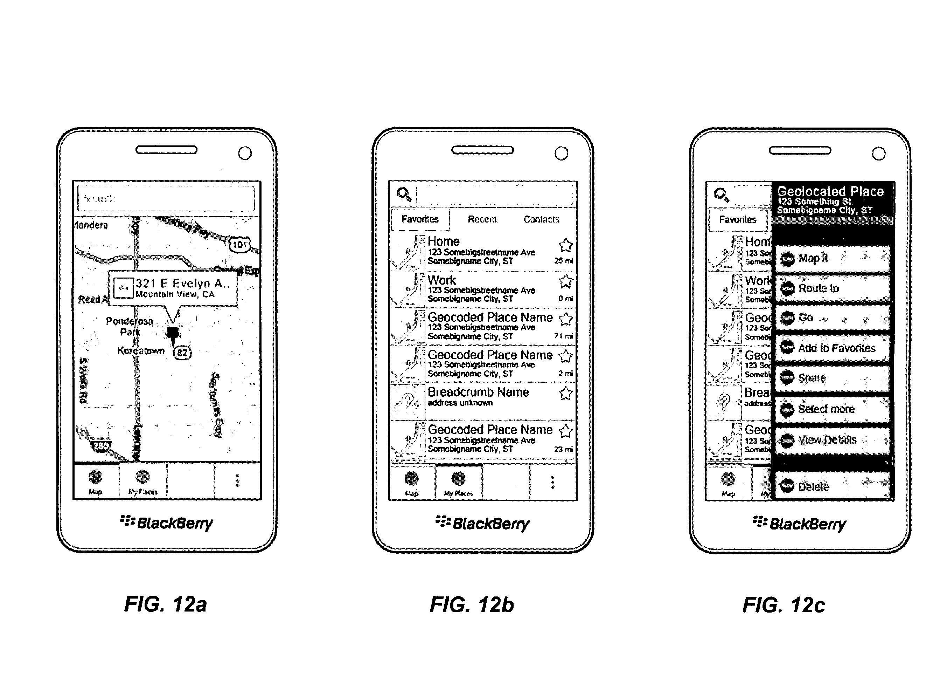

FIGS. 12a-12b depict mobile device user interfaces that enable toggling between a map and a list of favourite places ("My Places"). Specifically, in FIG. 12a, a map is displayed on a mobile device to show, in this example, a pushpin icon representing a specific address. The address is displayed in this example in a text bubble or callout that points to, or is otherwise associated with, the pushpin icon. The UI may comprise a map button and a My Places button (e.g. at the bottom of the screen, below the map, as shown by way of example in FIG. 12a). These buttons may be touched or selected to toggle between a map view and a places view such as the one shown by way of example in FIG. 12b. The user may then touch or select any one of these places. In response to touching a place, an action menu is then displayed as shown in FIG. 12c. This menu of action options enables the user to perform various actions in relation to a place such as map it, route to, go, add to favourites, share, select more, view details, delete, etc.

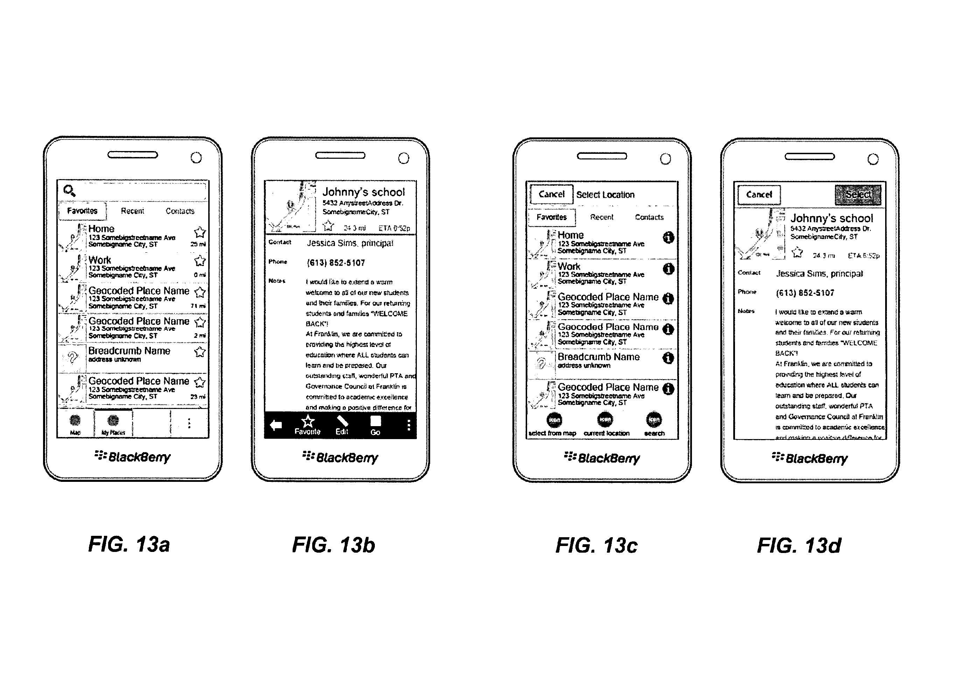

FIGS. 13a-13d depict various place-related user interfaces as further examples. These figures illustrate the concept of providing place details for a selected place. For example, from the UI of FIG. 13a, the user may select one of the listed places to obtain place details such as shown in FIG. 13b. Likewise, the user may select a place displayed on the UI of FIG. 13c to obtain place details as shown in FIG. 13d.

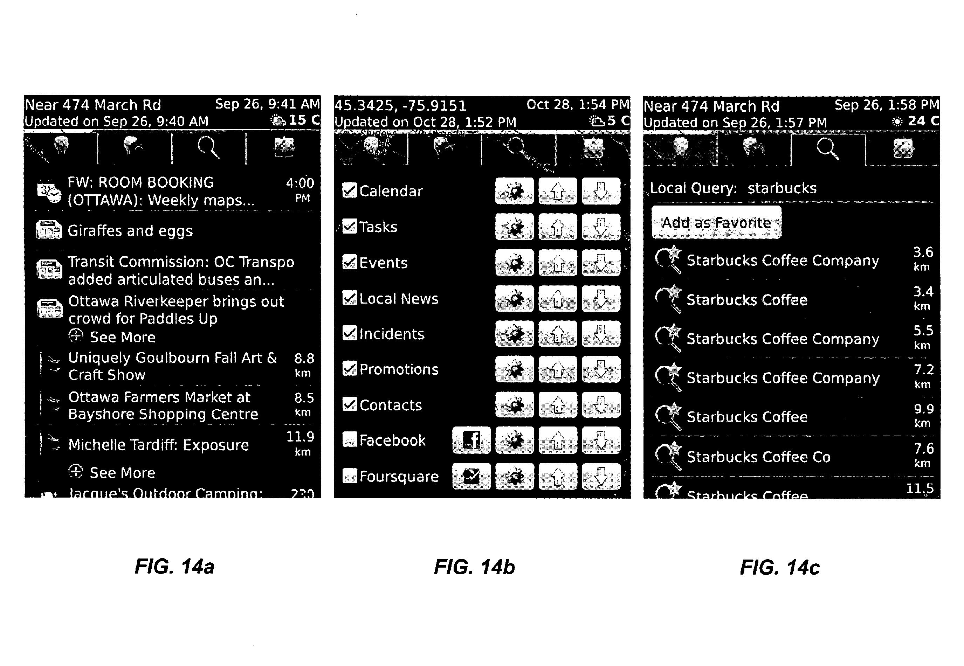

Another set of examples (FIGS. 14-17c) illustrate how place-related place data may be exploited to provide new device functionalities and features that were hitherto not possible with pre-existing technologies. In these figures, a place is defined in terms of a predetermined proximity to a place, in this example a user-specified address (e.g. "Near 474 March Rd"). The device may be configurable to specify a distance threshold, spatial tolerance or radius that defines "near", e.g. within 50 meters, 100 meters, 250 meters, 1km, 10 km, etc. In other embodiments, the device may provide a tiered approach, defining "at" to be within 10 meters, "near" to be within 100 meters, and "in the same general vicinity" to be within 1 km, for example. These examples illustrate how a given application executing on the mobile device or even multiple applications acting in concert or executing in parallel, may retrieve or obtain from the central place data store whatever place-related data is available for the place selected by the user or otherwise identified as the desired place by the mobile device. In each instance, the device may use this place-related data to provide location-based services (LBS) or may display the place-related data to the user in any number of ways, some of which are presented below.

FIG. 14a depicts a place view UI that lists all content related to the place, i.e. all content relevant to the user's current location at that particular time that is, or might be, of interest to the user. This UI is an example of how a place view may present place-related information to the user of various types (i.e. for various applications). For example, as shown in FIG. 14a, the place view presents a calendar entry, local news, local events/POIs. This UI thus provides a consolidated (overview) display of all place-related content where the displayed items of content are associated with a plurality of different applications. FIG. 14b depicts a UI that enables the user to control which types of content is to be presented on this consolidated (overview) display. Other functionalities may be provided on these UIs. For example, near the top of each screen are user interface elements that provide functionalities such as view list, configure which applications to show, search and view map. For example, touching the search button will cause the UI to switch to a search screen such as the one depicted in FIG. 14c. As shown in FIG. 14c, the local query may be entered. Search results are displayed along with distance information. A UI element is provided for adding one of the search results as a favourite place.

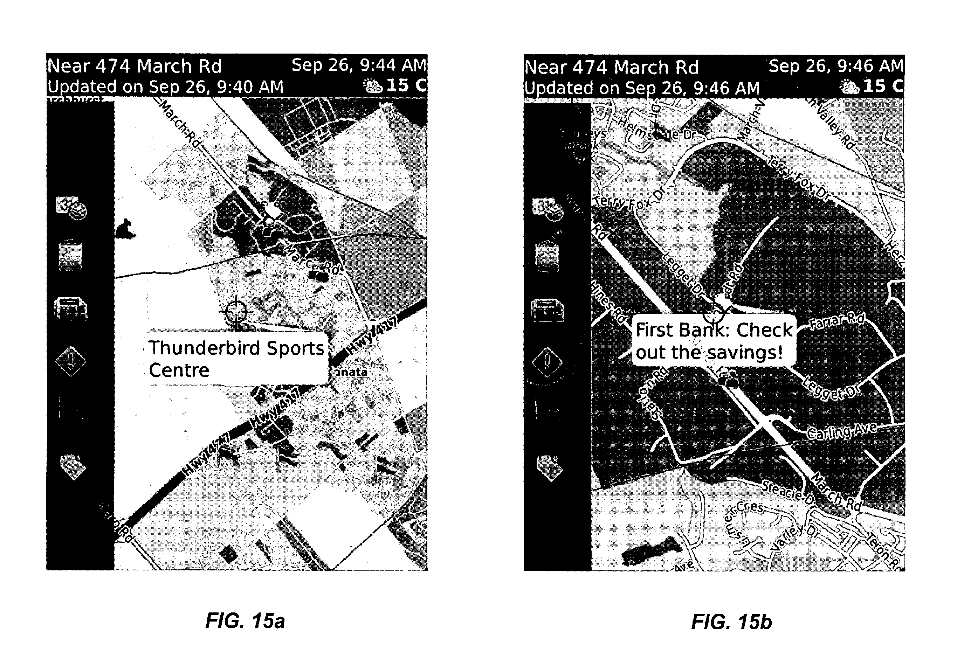

FIGS. 15a and 15b show how points of interest (POIs) may be displayed near the place selected by the user or otherwise identified by the mobile device or other computing device. The POI may be filtered by user preferences, which may have been set explicitly by the user or which may have been learned by monitoring usage patterns of the mobile device at this or other places. FIG. 15a depicts a map showing a POI that is "near 474 March Rd". In FIG. 15a, the POI ("Thunderbird Sports Centre") may be of interest to the user because of some prior relationship with that POI (visited there, placed a phone call there, e-mailed there, visited their website, searched for sports centres, etc.)

FIG. 15b depicts a map showing a POI augmented with location-based advertising "First Bank: Check out the savings!". This figure shows a map corresponding to the content shown in FIG. 14A, with the ad or promotion in focus. The location-based advertising (LBA) may be filtered based on user settings and/or based on usage patterns. For example, the mobile device may recognize that the user has recently searched for banks, or has visited this bank in recent months, done online banking with that bank, or has a friend or contact that works there, etc.

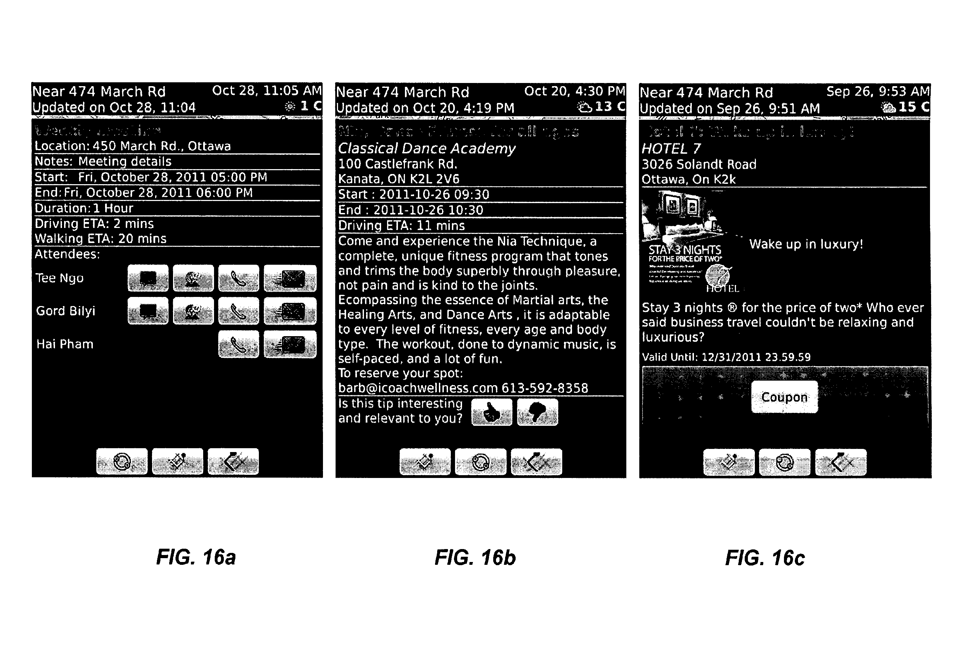

FIGS. 16a-16c depict further UI examples of how place-related content may be delivered and presented to the user of the mobile device or other computing device.

FIG. 16a depicts a place view for a weekly meeting as one example of a calendar event. This calendar event may be stored in the calendar application data store but the location data and any other place-related information about the place where the meeting occurs every week is stored in the centralized place data store. This UI may be accessed by opening or viewing the weekly meeting entry in the calendar application which then queries the centralized place data store to obtain the place data for this place and any place-related information that may be relevant to the user for that place. Alternatively, the user may access this calendar entry via the places view by navigating to the place in question (e.g. using My Places) and then clicking on the calendar event that is listed for that place. In FIG. 16a, the UI presents an indication of the address of the place (e.g. "near 474 March Rd"), the current date and time, current weather conditions, and an indication of when the place data was most recently updated. The UI also specifies the event location, start and end times, the driving and walking times (ETA) from the current location to the meeting or event location. Also noteworthy are the list of attendees who are scheduled to attend the meeting, as well as a plurality of user-selectable icons or interface elements that enable the user to communicate or otherwise interact with any one of the attendees. The attendees are examples of relationships (mentioned above) for the place. Other examples of relationships may be a pool of tennis players with whom a user habitually plays at a tennis club. When the user accesses the place view for the tennis club, these contacts may be displayed.

FIG. 16b depicts another example of a tip or suggested event that is suggested by the device to the user based on contextual information gleaned by the device about the user's habit and behaviour at that place. In this case, the device learns that the user enjoys attending dance classes at a nearby dance academy. The device then suggests to the user that she consider attending an upcoming dance class at the dance academy. This suggestion or tip enhances the user experience by informing the user of events, activities, offers, promotions, opportunities, etc. that are local or proximate to one of the user's places.

In addition to the address, start and end times, and driving time, the tip UI may present a description of the event or appointment, contact information (e-mail and phone) for reserving a spot at the dance class. The UI may present tip feedback icons (thumbs-up and thumbs-down icon, or yes/no, or a rating scale). Soliciting and obtaining this direct feedback from the user is another way of learning usage patterns, interests and preferences of the user. Future tips can be refined based on whether the user found the tip, suggestion or offer interesting. These tips may be generated by the mobile device or they may originate as LBA, which the device can filter or even modify (e.g. reformatting content) for the device.

FIG. 16c depicts an example of LBA that is offered to the user of the mobile device. In this example, the UI displays the ad or promotional offer onscreen. The offer, in this particular example, contains an e-coupon. A user interface element ("Coupon") may be displayed onscreen to permit the user to download the e-coupon.

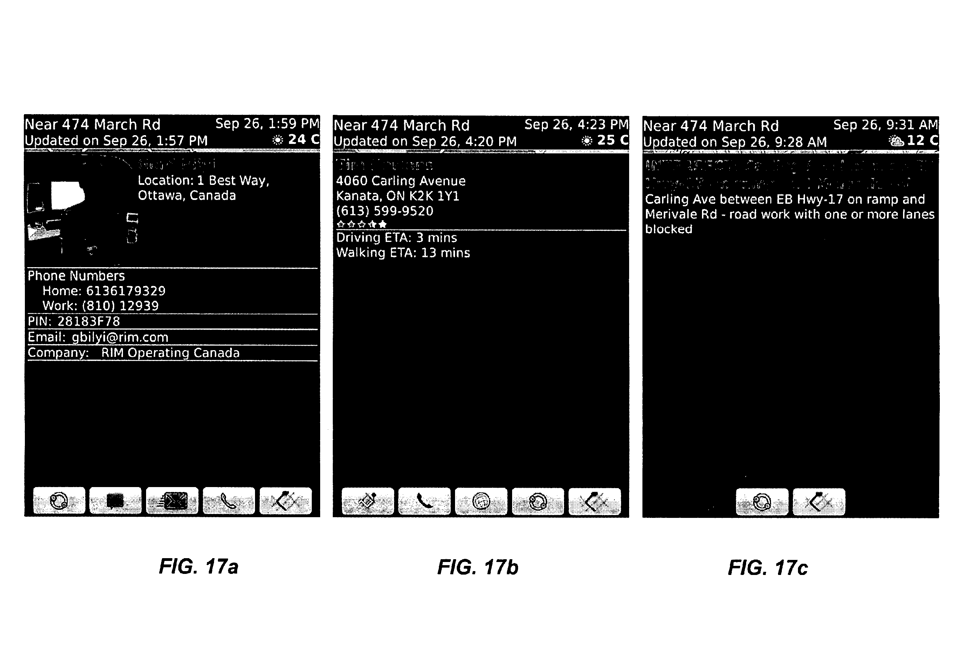

FIGS. 17a-17c depict various further example place views where the place is again defined in terms of a predetermined proximity to the same specified address (e.g. "Near 474 March Rd"). Once the place and its distance threshold has been set, as described above, the application (contacts) may request any contacts that are at this place (i.e. at or near 474 March Rd). By applying this filter, the contact Gord Bilyi is provided from the centralized place data store to the contacts application which can then display the contact for the user. Various user interface elements may be provided to interact with the contact, e.g. send mail, call, navigate to the contact's location, etc. As further depicted by way of example, the UI may also display an update time indicating when the data was last updated (e.g. "Updated on Sep 26, 1:57 PM").

In FIG. 17b, the place has been used to obtain information about a local coffee shop ("Tim Hortons") that is near 474 March Rd, e.g. via a local search or local query filtered using the location of the place. The address, phone number, rating, driving time, walking time are displayed in this example, along with the update time indicating when the data was last updated.

As another example, FIG. 17c depicts a place view that presents an intersection near 474 March Rd for the purposes of providing a traffic update. When launching a traffic application using the place "near 474 March Rd", the device identifies an intersection where there is a traffic alert, construction or road condition update.

In addition to the contacts, local search and traffic examples presented in FIG. 17a-17c, many other applications may require place data such as, but not limited to, a calendar, e-mail, instant messaging (e.g. BBM), MMS, navigation, travel, maps, and various social network applications, etc.

FIG. 18 is a flowchart depicting a computer-implemented place-recognition method. This method entails a step 700 of scanning or searching text (i.e. a body of text or a corpus of textual data content such as an e-mail, SMS, IM, blog, MS Word document, searchable PDF document, HTML document, etc.) for a place-indicating word (e.g. "my") or place-indicating character (e.g. an apostrophe). This scanning may entail parsing the text for a place-indicating text string such as word or character that implies a non-address place reference such as "John's house" or "Mel's office". Place references may contain (i) a proper name with an apostrophe (e.g. "John's house" or "Mel's office"); (ii) a possessive pronoun followed immediately by a noun (e.g. "our cottage"); (iii) a predetermined location-indicative keyword or phrase (e.g. rink, field, park, beach, school, club, lake, pond, river, mall, pub, bar, etc.) or even more colloquial, semantic terms like the "usual spot", "the usual place", "the hangout", etc. that may have special meaning to the user.)

A place reference is then determined at step 710 from the place-indicating text string (word or character). In most instances, this involves parsing the words or phrase immediately after the possessive pronoun (my, your, our, his, her, their, etc) or the apostrophe (usually on a proper name, e.g. John's, Mel's, etc.). For example, "my" followed by the word "home" leads the device to identify the place reference as "my home". A proper name with an apostrophe such as "John's" followed by the word "house" would lead the device to conclude that the place reference is "John's house". After identifying the place reference at step 710, the device (at step 730) looks up the place reference "John's house" in the place database to determine if this place reference is a place already stored in the place database. If yes, then the device hyperlinks the place (at step 750) for all actions applicable to this place including access to relevant place content based on the place data in the place database. If no, then the device (at step 760) hyperlinks the place to provide an option for the user to add this (potential) place to the place database. It should be borne in mind that "recognition" at this point is only speculative (i.e. this might be a place). It is not definite, however, as every place is only a potential place until it is confirmed to exist in the place database. When the text-scanning algorithm is running, in one implementation, the device marks potential text (e.g. John's house, pizza) as active and continues scanning the rest of the text in the background. Once the scanning is done, all active regions are merged into view with hyperlinks displayed. Each hyperlink is interactive text which the user can click on, touch or otherwise select to launch a browser or an app or, alternatively, to view a menu of actions or options).

As further depicted in FIG. 18, in one main embodiment, step 700 also includes scanning or searching the text for one of a plurality of frequent search terms (e.g. pizza, coffee, gas, sushi, Walmart, Starbucks). A dictionary, lexicon or keyword list may be constructed having a certain number of frequently searched terms or names. This list of frequently searched terms may be dynamically updated as new search terms are entered by the user. The list of place-indicating words or characters may also be dynamically updated, e.g. based on the user's linguistic usage. At step 720, if the term or name is in the frequent search terms, then the device looks up the term/name in the place database. The device then determines (at step 740) if the place (having that name) is already stored in the place database. If yes, then the device hyperlinks the place (at step 770) for all actions applicable to this place including providing access to relevant place content based on the place data in the place database. If no, then the device still hyperlinks the place (at step 780) but only for the purposes of local search. The place database may, in one embodiment, be a centralized place database on the computing device.

In main implementations of this place-recognition technology, the scanning or searching of text is triggered automatically (i.e. without user input or user intervention) in response to opening the file containing the text. The place-recognition function may be enabled or disabled by the user. In other implementations, the scanning or searching may be manually triggered in response to manual input on a user interface element.

In one implementation, the place recognizer on the computing device also recognizes street addresses (civic addresses), POI's and landmarks in addition to being able to recognize non-address place references.

On detecting a match between a place reference in the text and a place in the place database, the device may automatically cause a display to hyperlink the place in the text and to present a menu of user-selectable actions in relation to the place data for the place. The menu may be displayed in response to user input. For example, this menu may enable the user to map the place, navigate to the place, send or share place data for the place, copy place data for the place, etc.

The recognized place may also be signified in the text by emphasizing, highlighting, bolding, underlining or otherwise indicating the place to the user. In one embodiment, the text is hyperlinked so that the user may then select the place to retrieve place details, send or share place data for the place, etc.

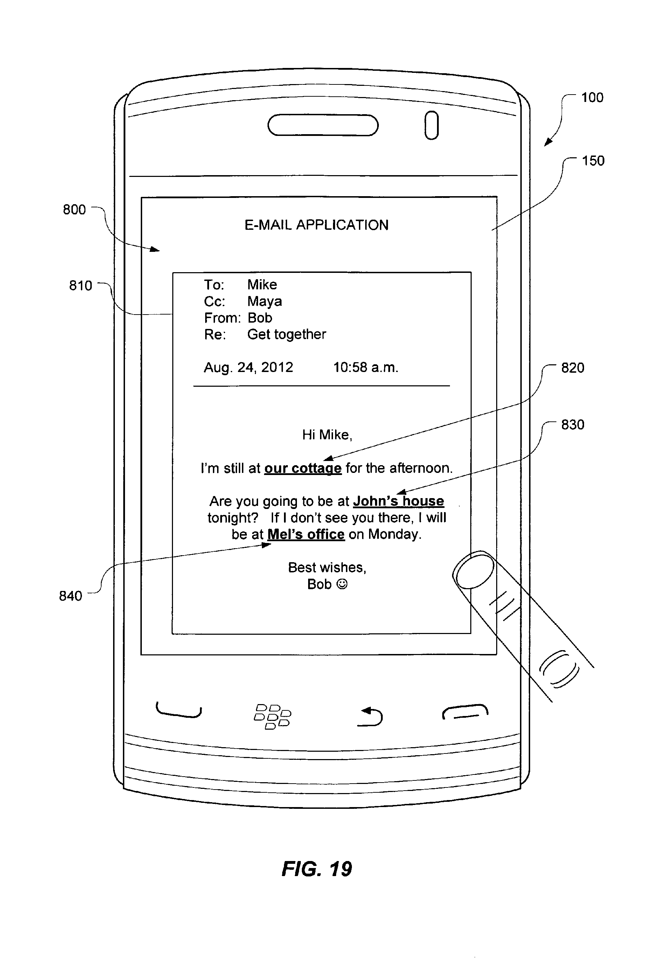

FIGS. 19-22 depict a sequence of user interfaces that a computing device having this place recognizer may present to the user.

FIG. 19 is an example UI 800 of an e-mail application executing on the computing device 100. The UI 800 is displayed on the display 150 of the computing device 100. As shown by way of example, the UI 800 may include To, From, CC and Re (subject) fields, a date and time, and other such information. The text in the body of the message, as shown by way of example in FIG. 19, contains data content. This data content is searched (scanned, parsed, etc.) for place-indicating words or characters that enable the device to identify potential place references. In this example, a first potential place reference 820 ("our cottage") is identified, a second potential place reference 830 ("John's house") is identified, and a third potential place reference 840 ("Mel's office") is identified. It may be that the data content file (e.g. the e-mail message in this case) contains no potential place references, only one potential place reference, or (as shown) multiple potential place references. Each potential place reference is then looked up in the place database to determine if there is a place corresponding to the place reference. In the example of FIG. 19, the place recognizer (i.e. a computing device having this place-recognition application) has identified "our cottage", "John's house" and "Mel's office") as being potential place references that may refer to places stored in the centralized place database. The device (or place recognizer) looks up each of these place references to determine if these places exist in the place database. For example, the place database may or may not contain places known as "our cottage", "John's house" and "Mel's office". If a place exists, it may be hyperlinked to permit access to the place data. If a place doesn't exist, the user may optionally add the place to the database.

In the example of FIG. 19, the user may touch, click or otherwise select any one of the three place references. In the illustrated embodiment, the device creates hyperlinks for each of the place references that are recognized places with place data in the place database. This place data can be accessed by selecting the place by touching the hyperlinked place in the text. Other techniques may be employed to present the place references to the user and to receive the user's optional selection of one of the place references. It is to be noted that the user need not select any of the place references. For example, the user may not be interested in accessing, viewing or using place-related data or content for any of the places. In some embodiments, the presentation of the place references (highlighting, underlining, bolding, etc.) may be enabled, disabled or configured by the user by accessing a settings, preferences and options page or menu.

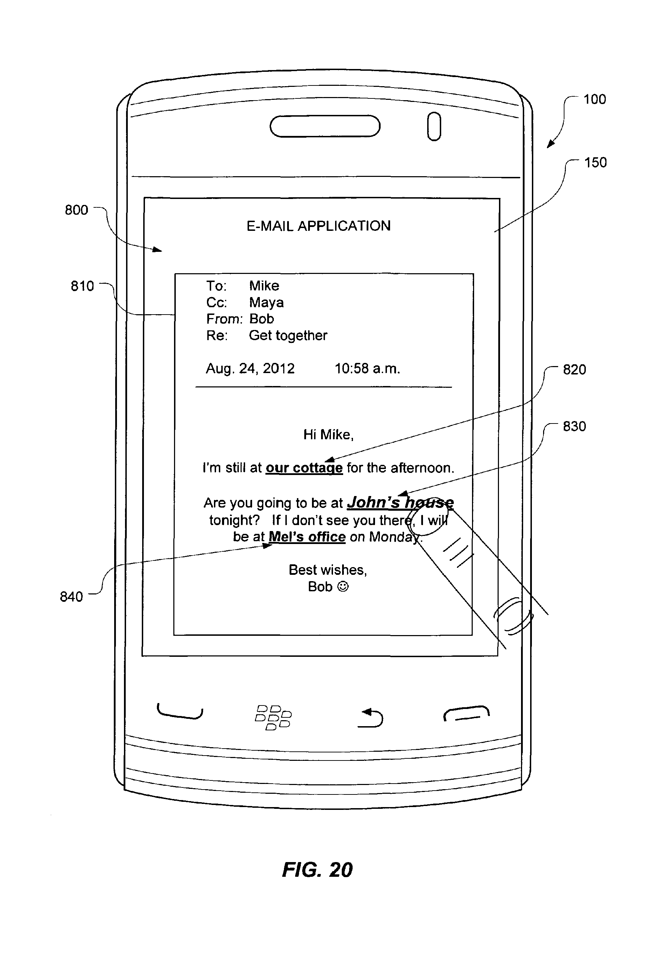

FIG. 20 depicts a subsequent UI in which the user selects the place reference "John's house" by, for example, touching the hyperlink created by the computing device (assuming that the device has a touch-screen). In response to user selection of the place reference "John's house", a place data request is sent to the place database to retrieve all or a subset of the available place data for the place corresponding to "John's house".

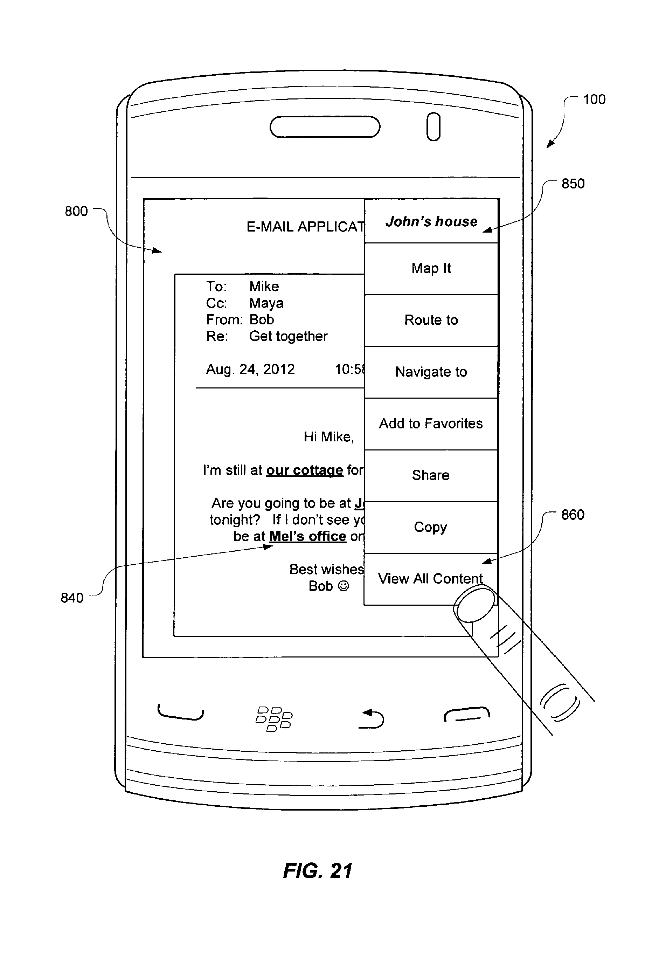

FIG. 21 depicts a subsequent UI presenting a menu 850 of actions that the user may perform in relation to the place data for the place "John's house". In general, the menu of user-selectable actions comprises one or more functions for viewing place-related content, creating additional place-related content, performing an action using the place-related content and sharing the place-related content. The specific menu depicted by way of example in FIG. 21 includes, in addition to a place label, tag, name or identifier such as "John's house", a menu of user-selectable actions such as "Map It", "Route to", "Navigate to", "Add to Favorites", "Share", and "Copy". In addition, in one embodiment, the menu may include an action to "View All Content" 860, i.e. to access the place view that presents a consolidated view of all of the content related to the place.

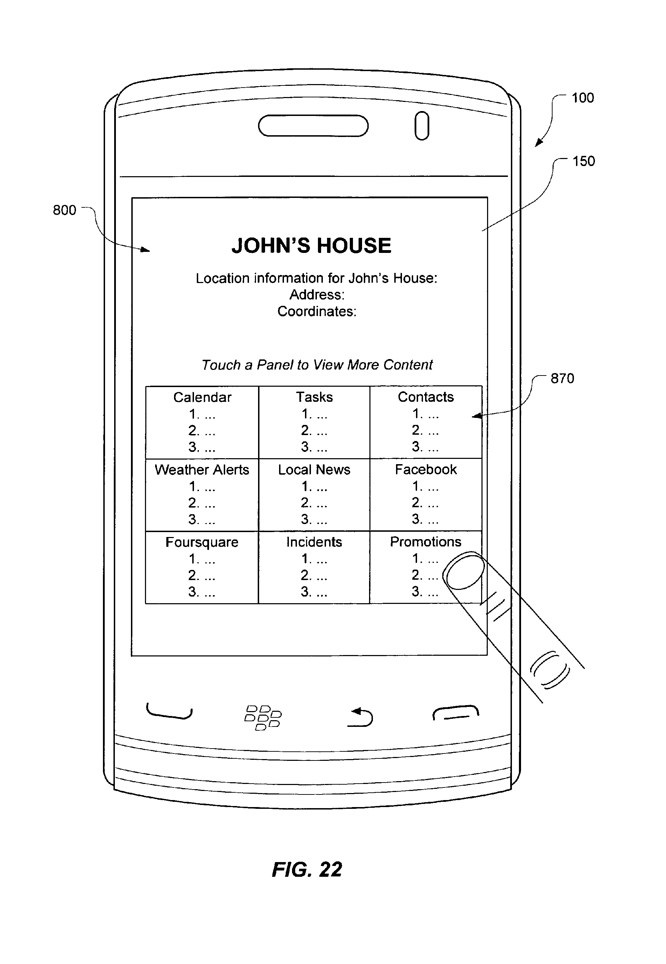

FIG. 22 depicts an example UI denoted by reference numeral 800 presenting a place view for the place "John's house". The place view displays a consolidation of various types of place-related content for the place "John's house". FIG. 22 shows the UI displayed on a display 150 of a mobile device 100 although this UI may be displayed on any other computing device. The UI 800 depicted by way of example in FIG. 22 is similar to the example UI of FIG. 14a in that it presents a consolidation or collection of place-related content for a plurality of different types of data, i.e. for data that is created from different applications on the computing device. In the example UI of FIG. 14a, the place view is in a simple list format, with the place-related content being organized, ordered or bundled in groups of sequentially listed items that are related to the same application or to the same type or category of data, e.g. all local appointments, then all local news, then all local events, etc. In the example UI of FIG. 22, the place view may include place information (place name, tag or identifier "John's house", any available address information, any available coordinates, etc.) as well as a plurality of onscreen panels 870 (or zones, areas, sectors, boxes, drawers, or windows) for each one of a plurality of different content categories. For example, in the case of a touch screen device, each panel may be a user-selectable interface element which, when touched, provides access to a complete listing of all content in a certain content category (i.e. generally content for one type of application). In other words, as depicted in FIG. 22, the place-related content may be organized thematically according to content categories or applications, e.g. tasks, contacts, events, news, weather alerts, etc. that relate to the place. The method may thus involve displaying a plurality of available content categories within the consolidated place-specific view. Within each content category, all or a subset of the available place-related content from the place database may be displayed. The presentation, arrangement and appearance of the panels may be manually configurable by the user or may be automatically adjusted based on usage patterns. Panels that are more frequently consulted by the user may be displayed more prominently. Panels that are seldom consulted may be displayed less prominently or even eventually omitted.

As depicted in FIG. 22, the categories of place-related content may include calendar events, tasks, contacts, weather alerts, local news, incidents, promotions, social media feeds (e.g. Facebook, Foursquare, Twitter, etc.). Each of these content categories may have its own panel 870. In a variant, group panels may be provided for groups of applications or content (e.g. social media, weather and news, etc.) In each instance, the content is filtered to include only place-related content that relates to the place, e.g. tasks that relate to the place, news that relate to the place, weather alerts that relate to the place, etc.

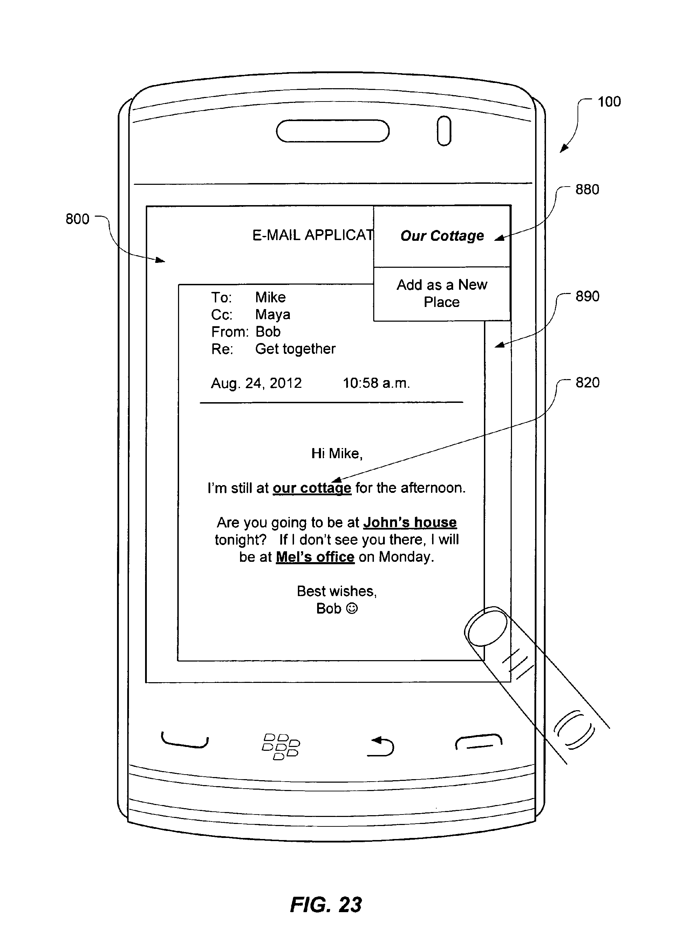

If the device recognizes a potential place reference for which the place does not exist in the place database, the device may provide a UI to enable the user to add this place to the place database. Such a UI is depicted by way of example in FIG. 23. In this example UI of FIG. 23, it is assumed that "our cottage" is a place reference to a place that is not found in the place database. The device may then provide via this UI an indication 880 that the place is not found in the place database. The device may also provide via this UI a menu option 890 to add the place to the place database.

In one implementation, after recognizing a place reference as referring to a place stored in the place database, the computing device having the place recognizer obtains all of the place-related content for the place from a centralized place database on or accessible by the computing device. The centralized place database may be a single integrated and unified database containing all place-related data. This database may be stored as a single centralized database in a memory of the computing device or on a remote server accessible by the computing device. Alternatively, the database may be a distributed database involving multiple remote data stores, server clusters or a cloud computing environment.

In one implementation, the place recognizer may be applied to enterprise place data to recognize company locations and meeting rooms. This can be achieved by registering enterprise place data with a place data management application (e.g. the Places Service). Thus, in one embodiment, the place database comprises enterprise-specific places derived from enterprise data. For example, the enterprise-specific places may be meeting rooms, conference rooms, offices, etc. or these enterprise-specific places may be buildings, sites, plants, factories, etc.

In the foregoing implementations, the place recognizer recognizes place references in textual data content for places that are already stored in the centralized place database. However, in another implementation, the place recognizer is also configured to recognize potentially new places that may be of interest or utility to the user and which the user may thus wish to save as a new place in the place database. In this implementation, therefore, the place recognizer enables the user to define or create new places based on a set of rules or an artificial intelligence (Al) that recognizes potentially new places. For example, the scanned data content may refer repeatedly to "Bob's cottage". The device may infer that, due to the frequent reference to Bob's cottage, this is a potentially important place to the user. The device may suggest to the user that Bob's cottage be defined as a new place in the place database. In other words, if the place reference relates to a new place (e.g. Bob's cottage) that is not already stored in the place database, the place recognizer may request user input from the user to determine (or confirm) whether to store the new place in the place database. On receipt of this confirmatory input, the device names the place "Bob's cottage" and may obtain automatically the coordinates from a GPS receiver. The coordinates may be reverse-geocoded to obtain a street address, city, state/province, country, postal code or zip code, etc. A lookup in a phone directory may supply the telephone number for Bob's cottage.

In one embodiment, before suggesting that the user create a new place in the place database, the device may cross-check other applications (second data sources) to see if the place reference exists in relation to other applications on the device. For example, the device may have found references to Bob's cottage in e-mail correspondence but then cross-checks a second data source such as a calendar application to see if Bob's cottage is an entry in that application as well. If the place appears in the calendar entry, the device may conclude that the place has importance to the user and thus should be suggested as a new entry in the place database. If user input is received to register Bob's cottage as a new place in the place database, information from the calendar entry may be imported or saved to the place database to supplement the other data relating to Bob's cottage.

In determining which new places are of importance, the place recognizer or Al may monitor different applications (e.g. e-mail, calendar, social networks, web browser) to look for common or recurring place references. The presence of the same reference in multiple applications can thus be used to support an inference that a place (e.g. Bob's cottage) is worth proposing to the user as a new place to be stored in the place database. Furthermore, if the user has physically been to Bob's cottage (e.g. which may be determined by GPS or other location-determining subsystem), this may be a further reason to consider that this place is important to the user.

The place recognizer may thus, in one embodiment, create a behaviour profile for the user by monitoring, over a period of time, usage patterns of web browsing, calendar entries, e-mail and text messaging, social networking, phoning and position data to learn the user's interests and habits.

In one embodiment, the behaviour profile may be based on location data. For example, the place recognizer may reverse geocode the location data to determine which restaurants, stores, hotels, cafés, etc. the user frequents. The place recognizer may be configured to suggest that a new place be created if the user visits the place more than a certain number of times within a predetermined period of time.

As another example, the behaviour profile may be based on data usage patterns involving browsing and messaging. The behaviour profile may be created without location data, i.e. without the user ever physically visiting the place. The usage patterns of mere web browsing, e-mails, etc. may suggest that a place is of great importance to the user in which case the device may suggest that the place be registered as a new place in the place database.

Therefore, the applications that originate the place references and the current position data (or recent or even historical travel data) may provide a context for determining whether a place is sufficiently important to be proposed a new place database entry. Thus, the decision to suggest the creation of a new place may, in certain embodiments, be based on a context determined by identifying an application associated with the data content and/or the location of the device relative to the place.

The place recognizer disclosed above may be a hardware, software or firmware component. The place recognizer may be most effectively embodied as a software application, component, module, plug-in, accelerator, or other such form. A single place recognizer may operate to search both the place database and any new content received or created by the device.

Any of the methods disclosed herein may be implemented in hardware, software, firmware or any combination thereof. Where implemented as software, the method steps, acts or operations may be programmed or coded as computer-readable instructions and recorded electronically, magnetically or optically on a fixed or non-transitory computer-readable medium, computer-readable memory, machine-readable memory or computer program product. In other words, the computer-readable memory or computer-readable medium comprises instructions in code which when loaded into a memory and executed on a processor of a computing device cause the computing device to perform one or more of the foregoing method(s).

A computer-readable medium can be any means that contain, store, communicate, propagate or transport the program for use by or in connection with the instruction execution system, apparatus or device. The computer-readable medium may be electronic, magnetic, optical, electromagnetic, infrared or any semiconductor system or device. For example, computer executable code to perform the methods disclosed herein may be tangibly recorded on a computer-readable medium including, but not limited to, a floppy-disk, a CD-ROM, a DVD, RAM, ROM, EPROM, Flash Memory or any suitable memory card, etc. The method may also be implemented in hardware. A hardware implementation might employ discrete logic circuits having logic gates for implementing logic functions on data signals, an application-specific integrated circuit (ASIC) having appropriate combinational logic gates, a programmable gate array (PGA), a field programmable gate array (FPGA), etc.

This invention has been described in terms of specific embodiments, implementations and configurations which are intended to be exemplary only. Persons of ordinary skill in the art will appreciate, having read this disclosure, that many obvious variations, modifications and refinements may be made without departing from the inventive concept(s) presented herein. The scope of the exclusive right sought by the Applicant(s) is therefore intended to be limited solely by the appended claims.

## Claims

1. A computer-implemented place-recognition method comprising:
searching text for a place-indicating text string;
identifying a place reference from the text based on the place-indicating text string; and
looking up the place reference in a place database to determine if the place reference corresponds to a place for which place data is stored in the place database.

2. The method as claimed in claim 1 further comprising, if the place reference corresponds to a place in the place database, presenting a menu of user-selectable actions in relation to the place data for the place.

3. The method as claimed in claim 1 further comprising, if the place reference does not correspond to a place in the place database, presenting a user interface asking the user whether to add the place reference as a new place to the place database.

4. The method as claimed in any one of claims 1 to 3 wherein searching the text further comprises searching the text for one of a plurality of frequent search terms.

5. The method as claimed in claim 4 further comprising looking up any of the frequent search terms that are found in the text in the place database to determine if any of the frequent search terms correspond to places in the place database.

6. The method as claimed in claim 5 further comprising:
if the frequent search term is a place in the place database, linking the place to enable a menu of user-selectable actions to be presented;
if the frequent search term is not a place in the place database, linking the place only to enable a local search.

7. A computer-readable medium comprising instructions in code which when loaded into a memory and executed by a processor of a computing device cause the computing device to perform the method of any one of the preceding claims.

8. A computing device comprising:
a memory operatively coupled to a processor for:
searching text for a place-indicating text string;
identifying a place reference from the text based on the place-indicating text string; and
looking up the place reference in a place database to determine if the place reference corresponds to a place for which place data is stored in the place database.

9. The computing device as claimed in claim 8 wherein the processor is configured to, if the place reference corresponds to a place in the place database, cause a display to present a menu of user-selectable actions in relation to the place data for the place.

10. The computing device as claimed in claim 8 wherein the processor is configured to, if the place reference does not correspond to a place in the place database, cause a display to present a user interface asking the user whether to add the place reference as a new place to the place database.

11. The computing device as claimed in any one of claims 8 to 10 wherein the processor is configured to search the text for one of a plurality of frequent search terms.

12. The computing device as claimed in claim 11 wherein the processor is configured to look up any of the frequent search terms that are found in the text in the place database to determine if any of the frequent search terms correspond to places in the place database.

13. The computing device as claimed in claim 12 wherein the processor is configured to:
if the frequent search term is a place in the place database, link the place to enable a menu of user-selectable actions to be presented;
if the frequent search term is not a place in the place database, link the place only to enable a local search.

14. The computing device as claimed in any one of claims 8 to 10 wherein one or both of a list of frequent search terms and a list of place-indicating words or characters are updated dynamically.

15. The computing device as claimed in any one of claims 8 to 10 wherein the place database comprises enterprise-specific places derived from enterprise data.
